# EUROPEAN PATENT APPLICATION

(11) **EP 2 869 271 A1**
(43) Date of publication of application: **06.05.2015**
(21) Application number: 14189438.6
(22) Date of filing: 17.10.2014
(51) Int. Cl.: G06T 11/60, G06Q 30/02

(54) **Method for composing image and mobile terminal programmed to perform the method**

(30) Priority: 21.10.2013 JP 2013218570
(71) Applicant: Toshiba TEC Kabushiki Kaisha, Tokyo 141-0032 (JP)
(72) Inventor: Mochizuki, Katsuhito, Shizuoka-Ken, Shizuoka 411-8520 (JP)
(74) Representative: Uchida, Kenji

(57) **Abstract**

A method for composing an image to be displayed on a display unit of a signage terminal includes acquiring, at a mobile terminal, one or more templates, receiving, at the mobile terminal, a user input of display elements to be added to one of the acquired templates, generating, at the mobile terminal, a composite image that includes an image of the acquired template with the display elements added thereto, and transmitting wirelessly, from the mobile terminal to the signage terminal, data of the composite image for display on the display unit of the signage terminal.

## Description

### CROSS-REFERENCE TO RELATED APPLICATION

This application is based upon and claims the benefit of priority from Japanese Patent Application No. 2013-218570, filed October 21, 2013, the entire contents of which are incorporated herein by reference.

### FIELD

Embodiments described herein relate generally to a method for composing an image to be displayed on a display unit of a signage terminal and a mobile terminal programmed to perform the method.

### BACKGROUND

Generally, a digital signage system can present an image, such as advertisement, to the public, using a signage terminal having a display panel. One type of the digital signage system can present an image that is generated in advance in accordance with a predetermined schedule or a user's operation.

Today, portable terminals such as smart phones or tablet terminals are widely used, and these portable terminals can perform many highly advanced functions, such as creating or obtaining new documents or images and modifying the documents or images. However, since a screen size of portable terminals is typically small, it may be difficult for users to perform creation of a detailed image from scratch or detailed setting and modification of the image, on the small screen. Furthermore, users without sufficient computer skills may have difficulty in handling the portable terminals for such purposes.

### DESCRIPTION OF THE DRAWINGS

FIG. 1 is a block diagram of a digital signage system according to an embodiment.
FIG. 2 is a front exterior view of a signage terminal apparatus included in the digital signage system.
FIG. 3 is a block diagram of the signage terminal apparatus.
FIG. 4 is a block diagram of an information delivery server included in the digital signage system.
FIG. 5 illustrates an example of a data configuration of a template database.
FIG. 6 is illustrates an example of design data.
FIG. 7 illustrates an example of an XAML file.
FIG. 8 illustrates an example of an input setting file.
FIG. 9 illustrates an example of a data configuration of a use template table.
FIG. 10 illustrates an example of a data configuration of a content table.
FIG. 11 illustrates an example of a data configuration of a decorative effect table.
FIG. 12 illustrates an example of a data configuration of a play list table.
FIG. 13 illustrates an example of a data configuration of a schedule table.
FIG. 14 is a block diagram of a content creation apparatus included in the digital signage system.
FIG. 15 is a block diagram of the content creation apparatus included in the digital signage system.
FIG. 16 illustrates an example of a template designation screen.
FIG. 17 illustrates an example of a content creation screen.
FIG. 18 illustrates an example of a decorative effect screen.
FIG. 19 illustrates an example of a reference designation determining screen.
FIG. 20 illustrates an example of a schedule registration screen.
FIG. 21 illustrates an example of a digital signage.
FIG. 22 illustrates an example of an XAML file including decorative effect data.
FIG. 23 is a flowchart of a content data generation process performed by the content creation apparatus.

### DETAILED DESCRIPTION

Embodiments provide a content creation apparatus and a program capable of alleviating content data creation work.

In general, according to one embodiment, a method for composing an image to be displayed on a display unit of a signage terminal includes acquiring, at a mobile terminal, one or more templates, receiving, at the mobile terminal, a user input of display elements to be added to one of the acquired templates, generating, at the mobile terminal, a composite image that includes an image of the acquired template with the display elements added thereto, and transmitting wirelessly, from the mobile terminal to the signage terminal, data of the composite image for display on the display unit of the signage terminal.

Hereinafter, with reference to the accompanying drawings, a content creation apparatus and a program according to an embodiment will be described in detail. In addition, the disclosure is not limited to the embodiment described below.

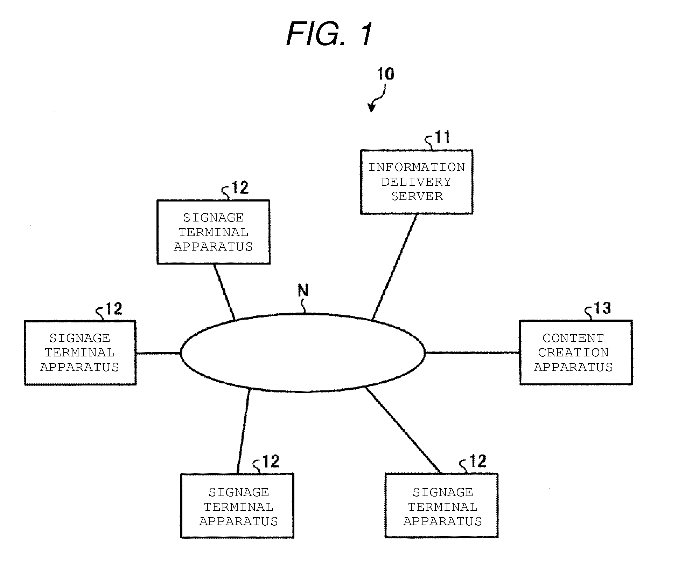

FIG. 1 is a block diagram of a digital signage system according to an embodiment. As illustrated in FIG. 1, a digital signage system 10 includes an information delivery server 11, a plurality of signage terminal apparatuses 12, and a content creation apparatus 13.

The information delivery server 11 is connected to the signage terminal apparatuses 12 and the content creation apparatus 13 via a communication network N such as a private local area network (LAN). The information delivery server 11 delivers content data such as advertisement information of merchandise to the signage terminal apparatus 12. In addition, the information delivery server 11 stores and manages the content data, which is created (generated) by the content creation apparatus 13.

The signage terminal apparatus 12 reproduces and displays the content data, which is delivered by or acquired from the information delivery server 11 via the communication network N.

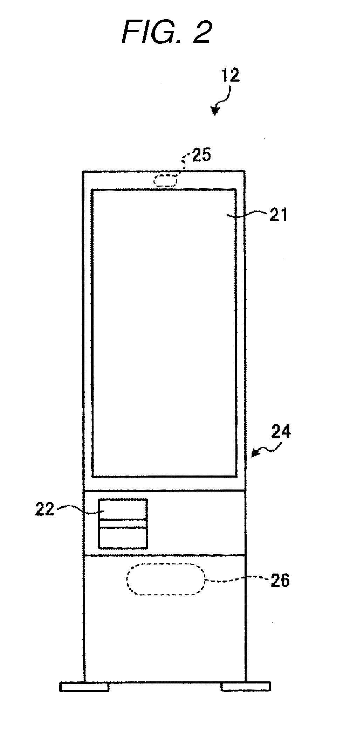

FIG. 2 is a front exterior view of the signage terminal apparatus 12. The signage terminal apparatus 12 includes a display unit 21 such as a liquid crystal display or a plasma display, a printer unit 22 which prints various tickets or coupons, and a casing 24 which holds the display unit 21 and the printer unit 22.

A camera unit 25 and a speaker unit 26 are built in an upper part of the casing 24. The camera unit 25 is used to perform image recognition by photographing a person, to specify an age range of the person, and to control the type of information to be transmitted thereto, and the speaker unit 26 outputs various sounds such as BGM or advertisement sounds. Alternatively, a process such as the image recognition may be performed by an upstream server such as the information delivery server 11 without the signage terminal apparatus 12 performing the process.

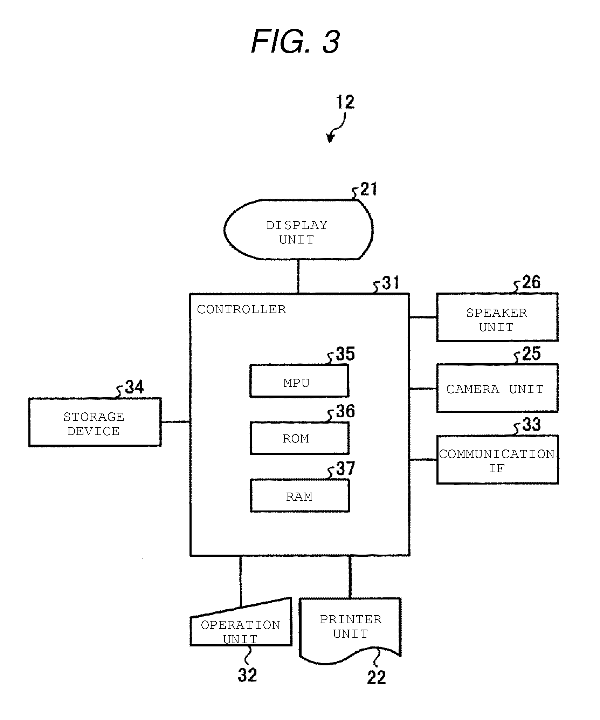

FIG. 3 is a block diagram of the signage terminal apparatus 12. The signage terminal apparatus 12 includes not only the above-described display unit 21, printer unit 22, camera unit 25, and speaker unit 26, but also a controller 31, an operation unit 32, a communication interface (IF) 33, and a storage device 34.

The controller 31 includes a micro processing unit (MPU) 35, a read only memory (ROM) 36 which stores various programs performed by the MPU 35, and a random access memory (RAM) 37, which is used as a work area. In addition, the controller 31 includes a clocking section such as a real time clock (RTC) (not illustrated) which tells the present date and time.

In the controller 31, the MPU 35 executes various programs stored in the ROM 36 or the storage device 34 so as to collectively control an operation of the signage terminal apparatus 12.

The operation unit 32 is an input device such as various switches or buttons and pointing devices, which enables a user to perform various operations. In addition, the operation unit 32 may be integrally formed with the display unit 21 as a touch panel display.

The communication interface 33 is a network interface for performing communication with the information delivery server 11 or the content creation apparatus 13 via the communication network N.

The storage device 34 is a hard disk drive (HDD) or a solid state drive (SSD), and stores various data items such as programs executed by the MPU 35 or content, which is an image to be displayed. In addition, it is assumed that the signage terminal apparatus 12 according to the present embodiment stores template data related to display of a digital signage in the storage device 34 in advance.

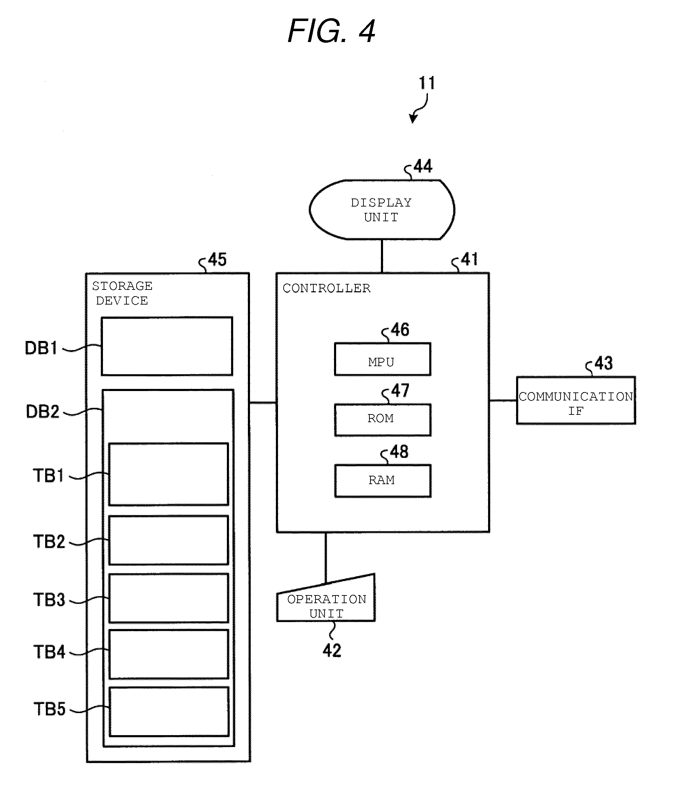

FIG. 4 is a block diagram of the information delivery server 11. The information delivery server 11 includes a controller 41, an operation unit 42, a communication interface (IF) 43, a display unit 44, and a storage device 45.

The controller 41 includes an MPU 46, a ROM 47, which stores various programs performed by the MPU 46, and a RAM 48, which is used as a work area. In addition, the controller 41 includes a clocking section such as an RTC (not illustrated) which tells the present date and time.

In the controller 41, the MPU 46 executes various programs stored in the ROM 47 or the storage device 45 so as to collectively control an operation of the information delivery server 11.

The operation unit 42 is an input device such as a keyboard, and pointing devices, which enables a user to perform various operations. The communication interface 43 is a network interface for performing communication with the signage terminal apparatus 12 or the content creation apparatus 13 via the communication network N. The display unit 44 is a display device such as a liquid crystal display.

The storage device 45 is an HDD or an SSD, and stores various data items such as programs executed by the MPU 46. In addition, the storage device 45 stores a template database DB1 and a content database DB2.

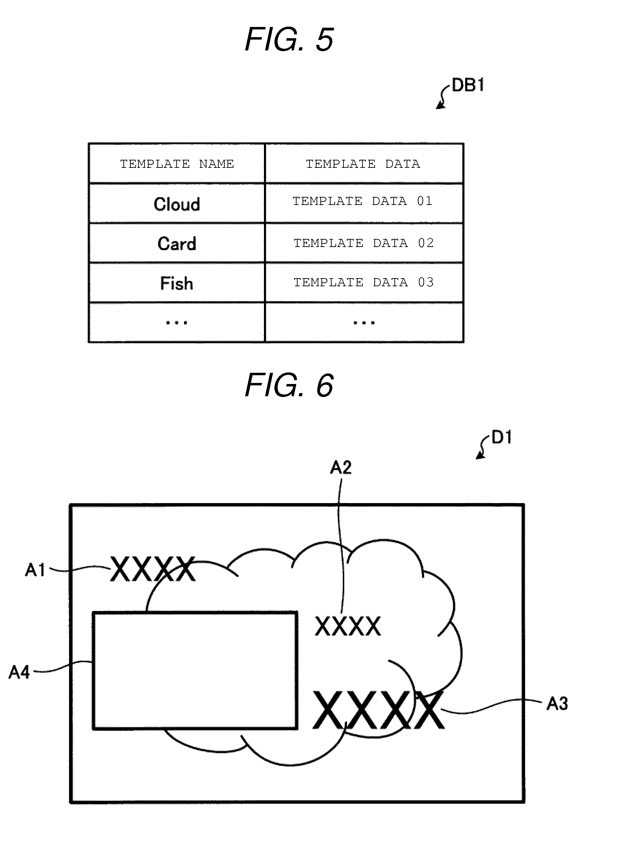

The storage device 45 stores in the template database DB1 template data serving as a sample in creating digital signage so that the template data may be acquired by the content creation apparatus 13. Here, FIG. 5 illustrates an example of a data configuration of the template database DB1. As illustrated in FIG. 5, in the template database DB1, a template name as identification information for identifying each template data item and the template data in correlation with each other are stored. The template data includes, for example, design data for defining screen design, an XAML file for defining various settings related to an input area in the screen design, and an input setting file.

FIG. 6 illustrates an example of the design data. Design data D1 in FIG. 6 includes a background image of a cloud form as screen design so as to correspond to the template name "Cloud" illustrated in FIG. 5. The design data D1 is provided with input areas A1 to A4 as areas for inputting material data at predetermined positions.

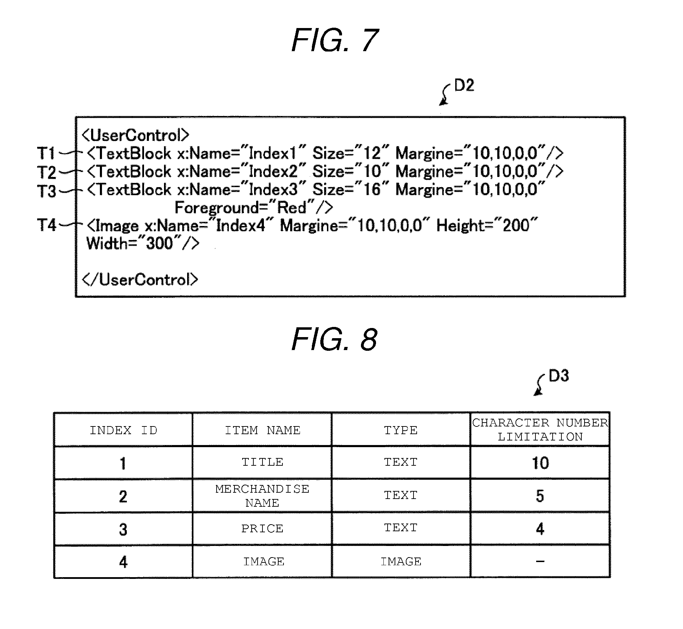

FIG. 7 illustrates an example of an XAML file. As illustrated in FIG. 7, an XAML file D2 includes taps T1 to T4 for defining settings related to display of material data items, which are respectively input to the input areas A1 to A4. Here, index IDs (1 to 4) described in the taps T1 to T4 are identifiers for identifying corresponding input areas. Specifically, the index 1 is correlated with the input area A1; the index 2 is correlated with the input area A2; the index 3 is correlated with the input area A3; and the index 4 is correlated with the input area A4.

The taps T1 to T4 include "Margine" for defining vertical and horizontal margins in the input area. In addition, the taps T1 to T4 include settings related to display of material data items input to the input areas. Here, the settings related to display are settings in accordance with the types of input areas A1 to A4, defined in an input setting file D3.

For example, if the types of input areas A1 to A3 are texts, a size (Size) of a font, a display color (Foreground), or the like used to display the texts is set in the corresponding taps T1 to T3. In addition, if the type of input area A4 is an image, a display size (Height and Width) or the like of image data is set in the corresponding tap T4. Further, predefined values (default values) are assumed to be applied to other settings which are not explicitly described in the taps T1 to T4.

FIG. 8 illustrates an example of the input setting file. An input setting file D3 in FIG. 8 defines various settings related to attributes of the input areas A1 to A4. For example, the input setting file D3 stores, as illustrated in FIG. 8, an index ID for identifying each input area, an item name of the input area, the type of input area, and a character limit (hereinafter, also referred to as a character number limit).

Here, the index IDs correspond to the index IDs (1 to 4) in the XAML file D2, that is, the input areas A1 to A4 of the design data D1. In addition, the name given to each input area, such as "title" or "merchandise name", is set in the item name. Further, the type of input material data such as "text" or an "image" is set in the type of input area. Here, in relation to the input areas (the indexes 1 to 3) whose types are "text", an upper limit value of the number of characters which may be input is set in the character number limitation column. Furthermore, in relation to the input area (the index 4) whose type is an "image", a character string is not input, and thus the character number limitation column is blank.

Returning to FIG. 4, the storage device 45 stores in the content database DB2 and manages content data, which is a target to be transmitted to the signage terminal apparatus 12. Specifically, the content database DB2 includes a use template table TB1, a content table TB2, a decorative effect table TB3, a play list table TB4, and a schedule table TB5, and the content data is managed using this table group.

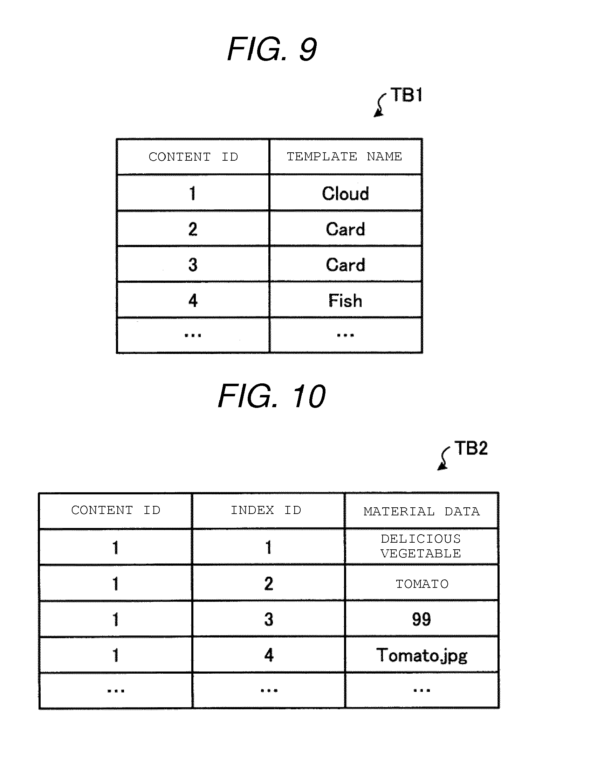

The storage device 45 stores in the use template table TB1 information which indicates template data used to display the content data. FIG. 9 illustrates an example of a data configuration of the use template table TB1. As illustrated in FIG. 9, in the use template table TB1, a content ID and a template name are stored in correlation with each other. Here, the content ID is information for identifying the content data. In addition, the template name corresponds to the template name of the template database DB1.

The storage device 45 stores in the content table TB2 material data, which is included in the template data to be used. FIG. 10 illustrates an example of a data configuration of the content table TB2. As illustrated in FIG. 10, in the content table TB2, a content ID, an index ID, and the material data are stored in correlation with each other. Here, the content ID corresponds to the content ID of the use template table TB1. In the column of the index ID, the index ID of each input area included in template data is stored in correlation with the content ID. In the column of the material data, text (character string), image data (still images or moving images) , or the like input to the input area of the corresponding index ID are stored.

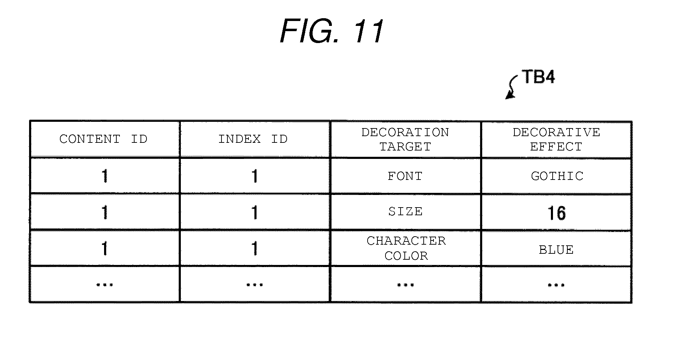

The storage device 45 stores in the decorative effect table TB3 information for defining a decorative effect applied to the material data. FIG. 11 illustrates an example of a data configuration of the decorative effect table TB3. As illustrated in FIG. 11, in the decorative effect table TB3, a content ID, an index ID, a decoration target to which decoration is applied, and a decorative effect thereof are stored in correlation with each other as decorative effect data. Here, the content ID corresponds to the content IDs of the use template table TB1 and the content table TB2. In the column of the index ID, an index ID of an input area to which material data, which is a target of a decorative effect, is included.

In the column of the decoration target, a target to which the decorative effect is applied in accordance with the type of corresponding input area is stored. For example, if the type of the input area is texts, a font, a font size, a character color, or the like is stored. In the column of the decorative effect, content of the decorative effect in accordance with a decoration target is stored. For example, if a decoration target is a font, the type of font is set as the decorative effect. If the decoration target is a font size, a size (numerical value) of a font is set as the decorative effect. If the decoration target is a character color, a display color of a font is set as the decorative effect.

In addition, in the use template table TB1, the content table TB2, and the decorative effect table TB3 described above, a record correlated with the same content ID corresponds to a single content data item.

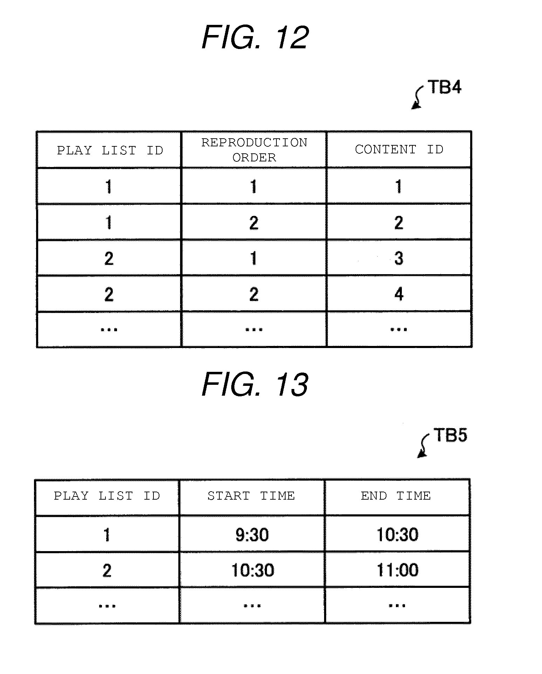

The storage device 45 stores in the play list table TB4 information for defining a reproduction order of the content data items. FIG. 12 illustrates an example of a data configuration of the play list table TB4. As illustrated in FIG. 12, in the play list table TB4, a play list ID, a reproduction order, and a content ID are stored in correlation with each other as play list data. Here, the play list ID is identification information for identifying each play list data item. In addition, the content ID corresponds to the content IDs of the use template table TB1, the content table TB2, and the decorative effect table TB3. Further, in the column of the reproduction order, a reproduction order of the content data items corresponding to each content ID in the play list data items having the same play list ID is stored.

The storage device 45 stores in the schedule table TB5 information indicating a delivery schedule of the play list data. FIG. 13 illustrates an example of a data configuration of the schedule table TB5. As illustrated in FIG. 13, in the schedule table TB5, a play list ID, a start time, and an end time are stored in correlation with each other as schedule data. Here, the play list ID corresponds to the play list ID of the play list table TB4. In addition, in the column of the start time the time when the delivery starts is stored, and in the column of the end time the time when the delivery ends is stored.

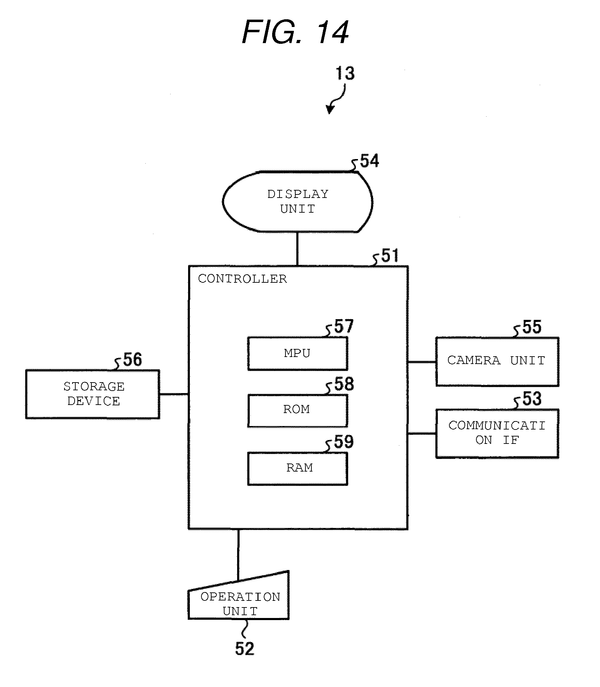

Returning to FIG. 1, the content creation apparatus 13 is, for example, a portable terminal apparatus such as a smart phone or a tablet terminal. FIG. 14 is a block diagram of the content creation apparatus 13. As illustrated in FIG. 14, the content creation apparatus 13 includes a controller 51, an operation unit 52, a communication interface (IF) 53, a display unit 54, a camera unit 55, and a storage device 56.

The controller 51 includes an MPU 57, a ROM 58, which stores various programs performed by the MPU 57, and a RAM 59, which is used as a work area. In the controller 51, the MPU 57 executes various programs stored in the ROM 58 or the storage device 56 so as to collectively control an operation of the content creation apparatus 13.

The operation unit 52 is an input device such as a keyboard, and pointing devices, which enables a user to perform various operations. In addition, the operation unit 52 may be integrally formed with the display unit 54 as a touch panel display.

The communication interface 53 is a network interface for performing communication with the information delivery server 11 or the signage terminal apparatus 12 via the communication network N. The display unit 54 is a display device such as a liquid crystal display. The camera unit 55 is an imaging device provided with an imaging element such as a charge coupled device (CCD) or a complementary metal-oxide semiconductor (CMOS).

The storage device 56 is an HDD or an SSD, and stores various data items such as programs executed by the MPU 57 or data related to a graphical user interface (GUI).

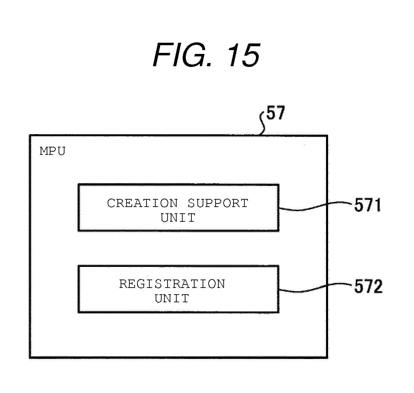

Next, functional units of the content creation apparatus 13 will be described. In the controller 51 of the content creation apparatus 13, by the MPU 57 executing the programs stored in the ROM 58 or the storage device 56, a creation support unit 571 and a registration unit 572 are theoretically created as functional units as illustrated in FIG. 15. Here, FIG. 15 is a block diagram of the MPU 57.

The creation support unit 571 is a functional unit which supports creation of content data. Specifically, if an instruction for creating the content data is received via the operation unit 52, the creation support unit 571 acquires template data from the template database DB1 of the information delivery server 11. Next, the creation support unit 571 controls the display unit 54 to display a template designation screen in which the acquired template data is disposed in a selectable manner.

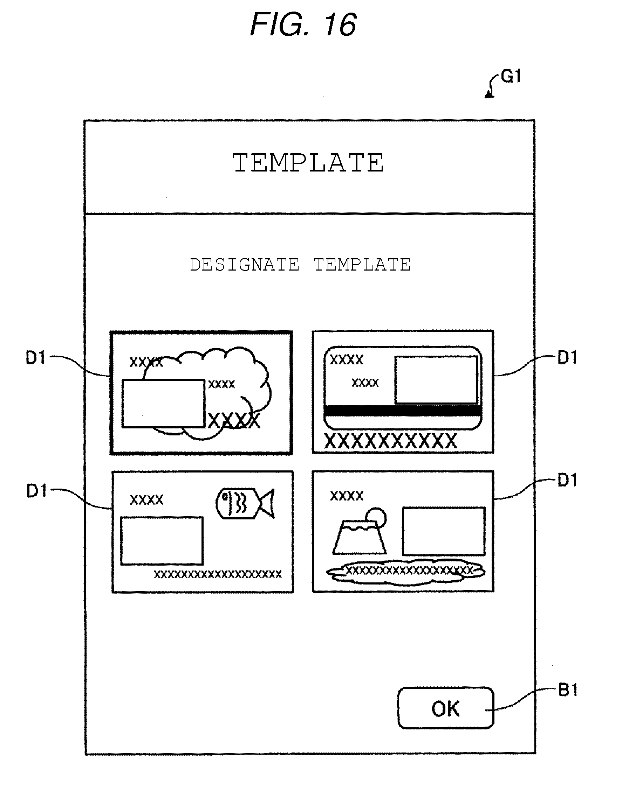

FIG. 16 is a diagram of the template designation screen. As illustrated in FIG. 16, the creation support unit 571 controls the display unit 54 to display the design data items D1 included in the template data in a list form on the template designation screen G1. Here, if one template data item (the design data D1) is designated (selected) using the operation unit 52, and then an OK button B1 is operated, the creation support unit 571 sets the template data as a use target. Next, the creation support unit 571 controls the display unit 54 to display a content creation screen for prompting a user to input material data on the display unit 54 based on the template data, which is a use target.

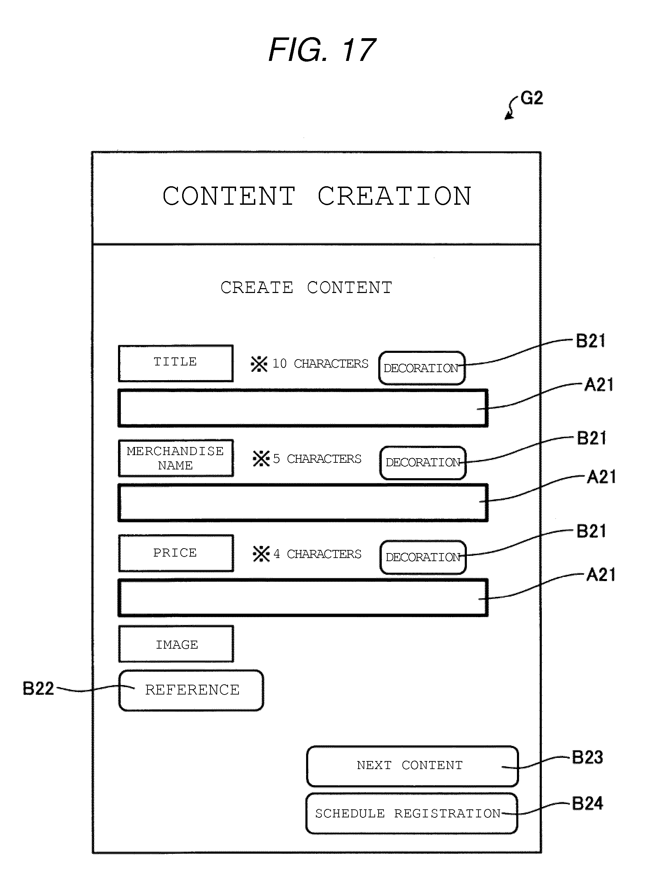

FIG. 17 illustrates an example of the content creation screen. The creation support unit 571 controls the display unit 54 to display a section for setting material data which is input to each input area on the content creation screen G2 based on the input setting file D3 included in the template data, which is a use target. Specifically, a setting column A21 for inputting a character string to an input area of "text" is displayed as the section. In addition, the number of characters which may be input to the setting column A21 is controlled so as to be equal to or smaller than a value of the character number limitation.

In addition, with respect to the input area whose type is "text," a decoration button B21 is displayed in order to make an instruction for applying a decorative effect to material data (character string) which is input to the corresponding input area. If an operation of the decoration button B21 is received, the creation support unit 571 displays a decorative effect screen for setting a decorative effect for the input area corresponding to the decoration button B21 on the display unit 54.

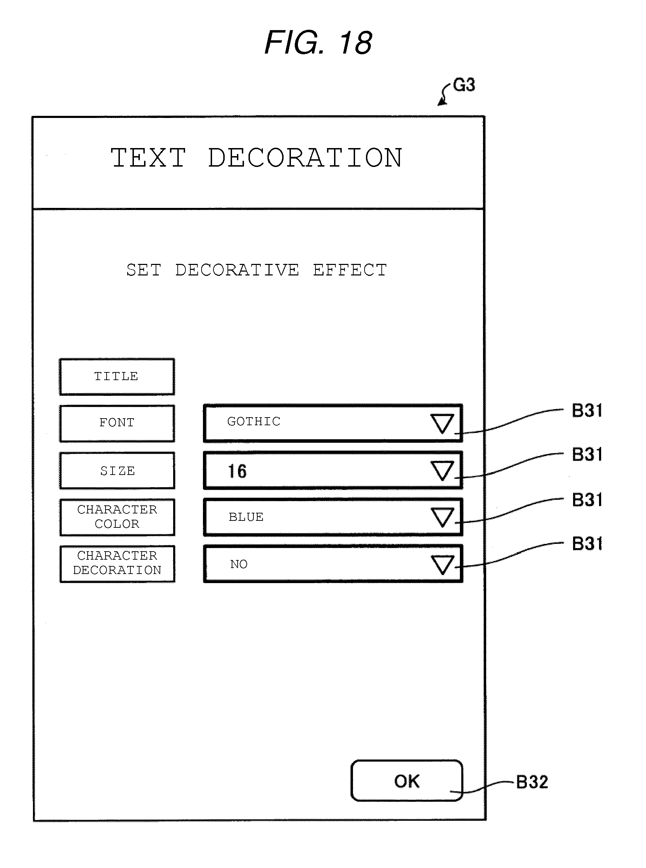

FIG. 18 illustrates an example of the decorative effect screen. As illustrated in FIG. 18, the decorative effect screen G3 is provided with select boxes B31 which allow selection of decorative effects, such as font, size, character color, and character decoration which are decoration targets. The character decoration indicates, for example, a bold type, an underline, a surrounding frame, and the like. FIG. 18 illustrates an example in which a font is set to "gothic", a size is set to "16", a character color is "blue", and character decoration is "no". In addition, if the decorative effect is designated, and then an OK button B32 is operated, the creation support unit 571 sets the decoration targets and the decorative effects thereof in an index ID of the corresponding input area in correlation with each other, so as to generate decorative effect data.

In addition, in the content creation screen G2 of FIG. 17, in relation to the input area of "image", a reference button B22 for selecting image data is displayed as a section for setting material data. If an operation of the reference button B22 is received, the creation support unit 571 controls the display unit 54 to display a reference designation determining screen which allows a reference designation (acquisition designation) of image data to be selected.

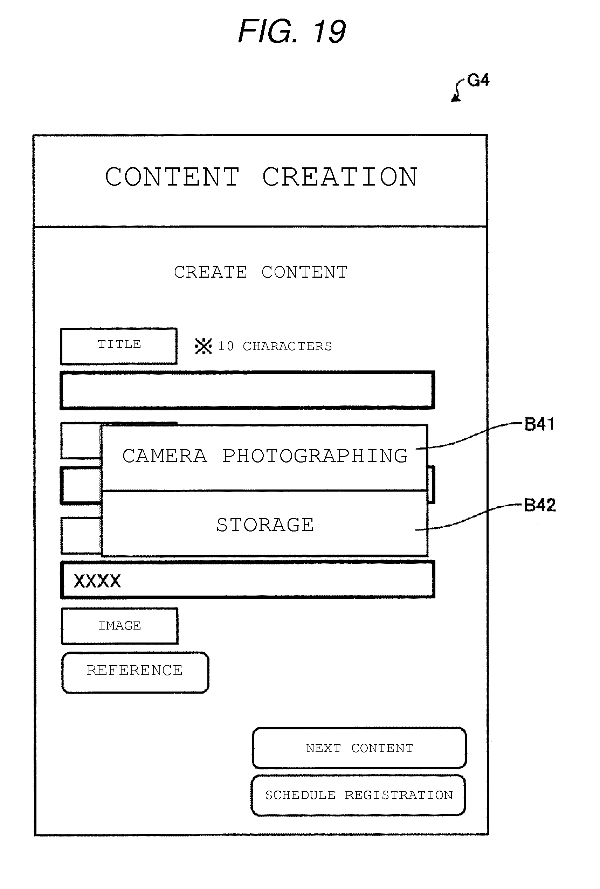

FIG. 19 illustrates an example of the reference designation determining screen. As illustrated in FIG. 19, the creation support unit 571 controls the display unit 54 to display the reference designation determining screen G4 which allows a user to select the camera unit 55 or a storage such as the storage device 56 as a reference destination (acquisition destination) of image data. FIG. 19 illustrates an example in which the reference designation determining screen G4 is displayed on the content creation screen G2.

Here, if a button B41 for designating the camera unit 55 is operated, the creation support unit 571 activates the camera unit 55 so as to permit image data acquired by the camera unit 55 to be used. In addition, when the camera unit 55 captures an image, the creation support unit 571 acquires image data of the captured image, and sets the image data as material data of a corresponding input area (index ID). On the other hand, if a button B42 for designating a storage is operated, the creation support unit 571 activates a program such as a file manager so as to permit the image data stored in the storage to be used. In addition, if designation of image data is received, the creation support unit 571 acquires the image data from the storage, and sets the image data as material data of a corresponding input area (index ID). Further, image data set as material data or a thumbnail image of the image data may be displayed in the content creation screen G2 (for example, near the reference button B22).

As illustrated in FIG. 17, the content creation screen G2 is provided with a next content button B23 for instructing creation of new content data and a schedule registration button B24 for instructing creation of schedule data.

If the next content button B23 is operated, the creation support unit 571 generates content data from data input to the template designation screen G1 and the content creation screen G2. Specifically, the creation support unit 571 correlates a template name of template data set as a use target and material data set in each input area (index ID) of the template data with a content ID assigned with a unique value, so as to generate a single content data item. In addition, the creation support unit 571 controls the display unit 54 to display the template designation screen G1 again, so as to prepare for generation of the next content data. If decorative effect data is generated in the decorative effect screen G3, content data is generated so as to include the decorative effect data. Further, the creation support unit 571 is assumed to set a reproduction order in the respective content data items based on an order of the generated content data items.

In addition, if the schedule registration button B24 is operated, the creation support unit 571 correlates content IDs of generated respective content data items and a reproduction order of the content data items with a play list ID assigned with a unique value so as to generate play list data. If decorative effect data is generated using the decorative effect screen G3, content data is generated so as to include the decorative effect data. Further, the creation support unit 571 controls the display unit 54 to display a schedule registration screen for defining a delivery schedule of the generated play list data (content data).

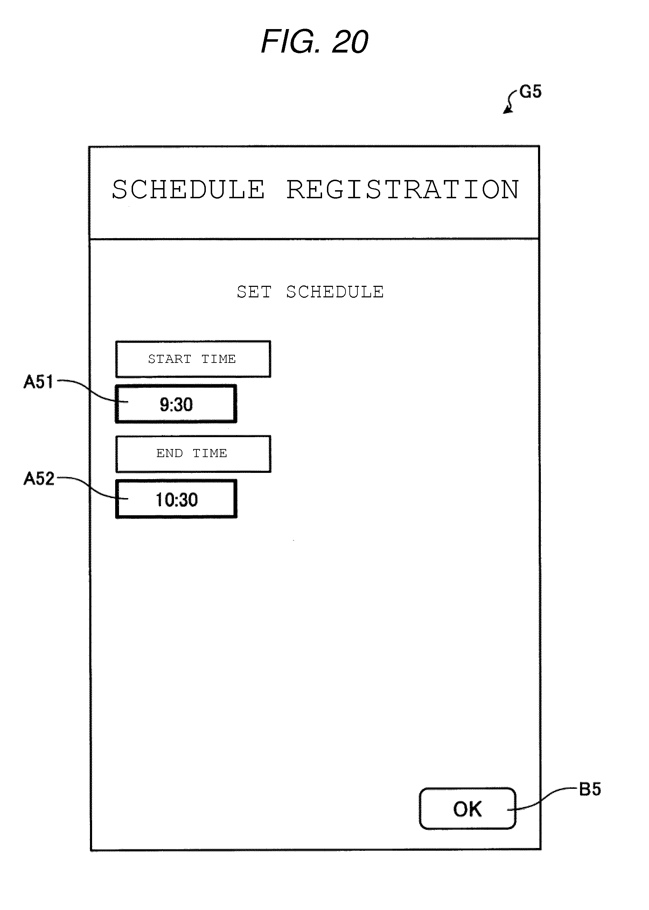

FIG. 20 illustrates an example of the schedule registration screen. As illustrated in FIG. 20, the schedule registration screen G5 is provided with an input column A51 for inputting a start time indicating when delivery starts, and an input column A52 for inputting an end time indicating when the delivery ends. Here, if a start time and an end time are input to the input column A51 and the input column A52, respectively, and an OK button B5 is operated, the creation support unit 571 generates schedule data based on the input data. Specifically, the creation support unit 571 correlates the start time input to the input column A51 and the end time input to the input column A52 with the play list ID of the previously generated play list data, so as to generate the schedule data.

In addition, if the OK button B5 is operated in a state in which either one or both of the input column A51 and the input column A52 are blank, an error message or the like may be displayed. Whether or not a delivery period from the input start time to the input end time overlap other delivery periods stored in the schedule table TB5 is checked, and a warning message or the like may be displayed if an overlap exists.

Further, the registration unit 572 transmits the schedule data, the play list data, and the content data generated by the creation support unit 571 to the information delivery server 11, so that the data is registered in the content database DB2.

When the schedule data, the play list data, and the content data are received from the content creation apparatus 13, the controller 41 of the information delivery server 11 registers the data in the content database DB2. Specifically, the schedule data is registered in the schedule table TB5, and the play list data is registered in the play list table TB4. In addition, the content data is registered in the use template table TB1 and the content table TB2. Further, if decorative effect data is included in the content data, the decorative effect data is registered in the decorative effect table TB3.

The schedule data transmitted from the content creation apparatus 13 may overlap existing schedule data stored in the schedule table TB5 in a delivery period (from the start time to the end time). In this case, the controller 41 of the information delivery server 11 preferentially registers the schedule data transmitted from the content creation apparatus 13 by replacing data, shifting the delivery time, or the like.

In addition, if the current time reaches any start time stored in the schedule table TB5, the controller 41 of the information delivery server 11 reads play list data having a play list ID correlated with the start time from the play list table TB4. Next, the controller 41 of the information delivery server 11 reads content data having a content ID included in the play list data from the use template table TB1 and the content table TB2 in a reproduction order, and transmits the read content data to the signage terminal apparatus 12. Further, if the current time reaches any end time stored in the schedule table TB5, the controller 41 of the information delivery server 11 stops the transmission of the content data.

In addition, data transmitted from the information delivery server 11 is not limited to content data, and play list data or template data may be transmitted along with corresponding content data. Further, if the play list data is transmitted, the signage terminal apparatus 12 may display content data items in a reproduction order, and thus the content data items may be collected and transmitted.

Meanwhile, if content data is received from the information delivery server 11, the controller 31 of the signage terminal apparatus 12 stores the content data in the storage device 34. Then, the controller 31 inputs corresponding material data to each input area of template data which is indicated by the content data. In addition, the controller 31 reproduces the template data to which the material data is included, so as to display a digital signage on the display unit 21. Here, "reproduction" indicates that reproduction images (a still image or a moving image), sounds, or the like are generated from the template data to which the material data is included, and are used for screen display or sound reproduction.

Further, if the play list data is received from the information delivery server 11, the controller 31 of the signage terminal apparatus 12 is assumed to reproduce digital signages (content data) according to a reproduction order set in the play list data.

Here, if decorative effect data is included in the content data, the controller 31 of the signage terminal apparatus 12 applies a decorative effect to material data of a corresponding input area based on the decorative effect data. In addition, template data with the decorative effect is displayed on the display unit 21 as a digital signage.

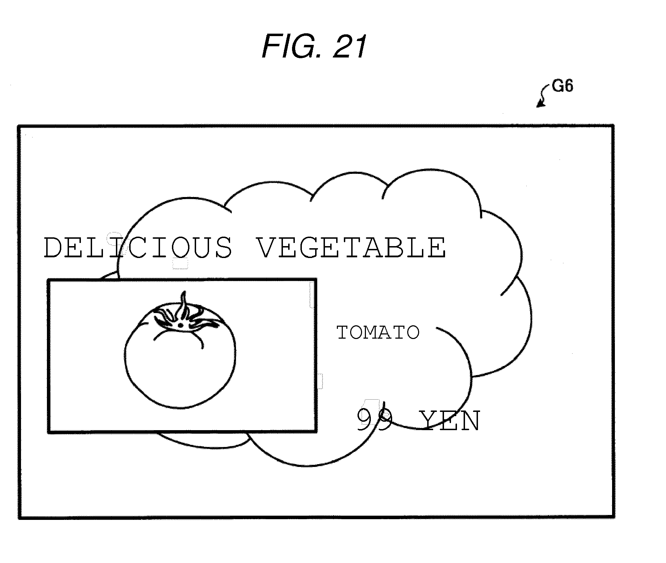

For example, content data having "1" as a content ID illustrated in FIGS. 5 to 11 is assumed to be transmitted to the signage terminal apparatus 12. In this case, the controller 31 of the signage terminal apparatus 12 inputs the respective material data items set in the content table TB2 of FIG. 10 to the corresponding input areas A1 to A4 of the design data D1 of FIG. 6. In addition, the controller 31 of the signage terminal apparatus 12 applies the decorative effect indicated by the decorative effect data of FIG. 11 to the material data (character string) input to the input area A1. Thus, for example, a digital signage G6 as illustrated in FIG. 21 is displayed on the display unit 21.

In addition, a method of applying a decorative effect to material data is not particularly limited, and, for example, a decorative effect may be applied by editing settings of template data. More specifically, among setting content items of the respective input areas described in the XAML file D2, settings of an input area (index ID) designated by decorative effect data may be edited temporarily or permanently.

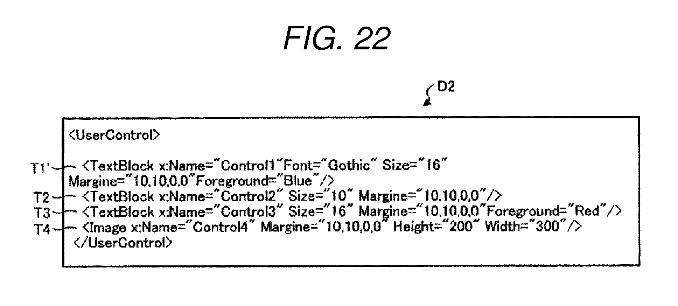

For example, if the decorative effect data of the content 1 illustrated in FIG. 11 is included in the XAML file D2 illustrated in FIG. 7, a reflection result thereof is as in a state illustrated in FIG. 22. Here, FIG. 22 illustrates an example of the XAML file D2 to which the decorative effect data is included. As illustrated in FIG. 22, the setting content of the tap T1 corresponding to the index 1 designated by the decorative effect data is changed to content shown in a tap T1'. Specifically, "Font="Gothic"" indicating the type of font and "Foreground="Blue"" indicating a display color of the font are added. In addition, Size indicating a size of the font is changed to "16".

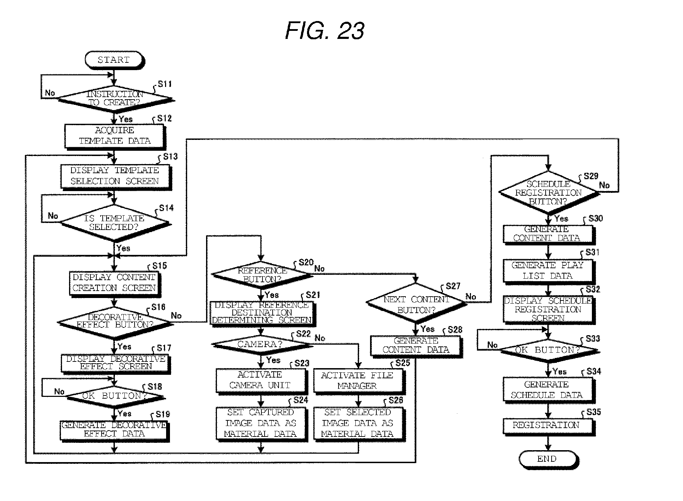

Next, an operation of the functional units of the content creation apparatus 13 will be described. FIG. 23 is a flowchart of a content data generation process performed by the content creation apparatus 13.

First, the creation support unit 571 waits until creation of content data is instructed using the operation unit 52 (No in step S11). If an instruction for creation of content data is received (Yes in step S11), the creation support unit 571 accesses the template database DB1 of the information delivery server 11 so as to acquire template data (step S12). Successively, the creation support unit 571 controls the display unit 54 to display the template designation screen G1 based on the acquired template data (step S13).

Subsequently, the creation support unit 571 waits until one template data item is selected on the template designation screen (No in step S14). If selection of the template data is received (Yes in step S14), the creation support unit 571 sets the template data as a use target. Next, the creation support unit 571 controls the display unit 54 to display the content creation screen G2 based on the template data which is a use target (step S15).

Successively, the creation support unit 571 determines whether or not the decoration button B21 is operated on the content creation screen G2 (step S16). If the decoration button B21 is determined to be operated (Yes in step S16), the creation support unit 571 controls the display unit 54 to display the decorative effect screen G3 with respect to a corresponding input area (step S17). Next, the creation support unit 571 waits until the OK button B32 is operated (No in step S18). If an operation of the OK button B32 is received (Yes in step S18), the creation support unit 571 generates decorative effect data in which a decoration target and a decorative effect are correlated with an index ID of the corresponding input area (step S19), and the process returns to step S15. In addition, a data value which has been already input (set) is set in the content creation screen G2 that is displayed when the creation support unit 571 returns to step S15.

In addition, the creation support unit 571 determines whether or not the reference button B22 is operated on the content creation screen G2 (No in step S16, and step S20). Here, if the reference button B22 is determined to be operated (Yes in step S20), the creation support unit 571 controls the display unit 54 to display the reference designation determining screen G4 (step S21). Subsequently, the creation support unit 571 determines which of the camera unit 55 and the storage is selected as a reference destination of image data (step S22).

If the camera unit 55 is determined to be selected in step S22 (Yes in step S22), the creation support unit 571 activates the camera unit 55 (step S23). In addition, if image data captured by the camera unit 55 is acquired, the creation support unit 571 sets the image data as material data (step S24), and returns to step S15.

On the other hand, if the storage is determined to be selected in step S22 (No in step S22), the creation support unit 571 activates a program such as a file manager (step S25) . Next, if designation of image data is received, the creation support unit 571 sets the image data as material data (step S26), and the process returns to step S15.

In addition, the creation support unit 571 determines whether or not the next content button B23 is operated on the content creation screen G2 (No in step S16, No in step S20, and step S27). Here, if the next content button B23 is operated (Yes in step S27), the creation support unit 571 generates content data based on data input on the template designation screen G1 and the content creation screen G2 (the decorative effect screen G3) (step S28), and the process returns to step S13.

Further, the creation support unit 571 determines whether or not the schedule registration button B24 on the content creation screen G2 is operated (No in step S16, No in step S20, No in step S27, and step S29). Here, if the schedule registration button B24 is operated (Yes in step S29), the creation support unit 571 generates content data based on data input on the template designation screen G1 and the content creation screen G2 (the decorative effect screen G3) (step S30). Subsequently, the creation support unit 571 generates play list data based on an order of generated content data (step S31), and proceeds to step S32. In addition, if none of the buttons are operated on the content creation screen (No in step S16, No in step S20, No in step S27, and No in step S29), the process returns to step S15 again.

In subsequent step S32, the creation support unit 571 controls the display unit 54 to display the schedule registration screen G5 (step S32). Next, the creation support unit 571 waits until the OK button B5 on the schedule registration screen G5 is operated (No in step S33). If the OK button B5 is operated (Yes in step S33), the creation support unit 571 generates schedule data based on input start time and end time (step S34).

The registration unit 572 registers the schedule data, the play list data, and the content data generated through the process in the database of the information delivery server 11 (step S35), and finishes the process.

As mentioned above, according to the content creation apparatus 13 according to the present embodiment, template data which may be used is displayed on the template designation screen G1, and content data is generated based on selected template data. Thus, a user may easily create content data. In addition, a decorative effect for material data which is a display target may be designated with a simple operation, and thus rich content may be easily created.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

For example, in the above-described embodiment, the creation support unit 571 of the content creation apparatus 13 acquires template data from the information delivery server 11, but the present invention is not limited thereto. The creation support unit 571 may acquire template data stored in other apparatuses. For example, the content creation apparatus 13 may hold the template database DB1 in the storage device 56, and may acquire template data from the storage device 56.

In addition, although, in the above-described embodiment, data (schedule data, play list data, and content data) generated by the content creation apparatus 13 is transmitted (registered) to the information delivery server 11, the data may be directly transmitted to the signage terminal apparatus 12. In this case, preferably, the signage terminal apparatus 12 preferentially displays data transmitted from the content creation apparatus 13 so that the data does not conflict with content data transmitted from the information delivery server 11.

In addition, in the embodiment, the template database DB1 and the content database DB2 are stored in the storage device 45 of the information delivery server 11, but the present invention is not limited thereto. For example, the template database DB1 and the content database DB2 may be stored in a storage device (not illustrated), which is connected to the information delivery server 11 via the communication network N.

In addition, in the embodiment, content data is transmitted from the information delivery server 11 to the signage terminal apparatus 12, but is not limited thereto, and the content data may be acquired by the signage terminal apparatus 12 accessing the information delivery server 11.

Further, in the embodiment, material data included in template data are text and image data, but the material data is not limited thereto. For example, sounds or music data such as BGM may be included in the template data as the material data. Furthermore, music data such as BGM may be included in the template data in advance.

In the embodiment, content data or the like is generated using the template designation screen G1, the content creation screen G2, and the like, but other GUIs may be used. For example, template data (design data D1) designated on the template designation screen G1 may be displayed, and setting of material data, setting of a decorative effect, or the like may be directly performed on each input area in the design data D1.

The program executed in each apparatus according to the embodiment is recorded on a computer readable recording medium such as a CD-ROM, a flexible disc (FD), a CD-R, or a digital versatile disk (DVD), and is provided in a file with an installable format or an executable format.

In addition, the program executed in each apparatus according to the embodiment may be stored on a computer connected to a network such as the Internet, and may be downloaded via the network, so as to be provided. Further, the program executed in each apparatus according to the embodiment may be provided or distributed via a network such as the Internet.

## Claims

1. A method for composing an image to be displayed on a display unit of a signage terminal, comprising:
acquiring, at a mobile terminal, one or more templates;
receiving, at the mobile terminal, a user input of display elements to be added to one of the acquired templates;
generating, at the mobile terminal, a composite image that includes an image of the acquired template with the display elements added thereto; and
transmitting wirelessly, from the mobile terminal to the signage terminal, data of the composite image for display on the display unit of the signage terminal.

2. The method according to claim 1, further comprising:
generating at the mobile terminal an interface through which the user can select one template from the one or more acquired templates.

3. The method according to claim 1 or 2, further comprising:
generating at the mobile terminal an interface through which the user can input texts to be added to the acquired template.

4. The method according to claim 3, further comprising:
generating at the mobile terminal an interface through which the user can set one or more attribute (s) of the texts.

5. The method according to any one of claims 1 to 4, further comprising:
generating at the mobile terminal an interface through which the user can select a picture to be added to the acquired template.

6. The method according to any one of claims 1 to 5, further comprising:
generating at the mobile terminal an interface through which the user can set a time period during which the composite image is to be displayed on the display unit; and
transmitting information about the time period from the mobile terminal to the signage terminal.

7. The method according to any one of claims 1 to 6, further comprising:
generating at the mobile terminal an interface through which the user can set a sequence according to which the composite image is to be displayed on the display unit with respect to other images to be displayed on the display unit; and
transmitting information about the sequence from the mobile terminal to the signage terminal.

8. The method according to any one of claims 1 to 7, wherein the data of the composite image is transmitted wirelessly using one of near-field wireless communication protocols.

9. A non-transitory computer readable medium comprising a program that is executable in a mobile terminal to cause the mobile terminal to perform a method for composing an image to be displayed on a display unit of a signage terminal, the method comprising:
acquiring, at the mobile terminal, one or more templates;
receiving, at the mobile terminal, a user input of display elements to be added to one of the acquired templates;
generating, at the mobile terminal, a composite image that includes an image of the acquired template with the display elements added thereto; and
transmitting wirelessly, from the mobile terminal to the signage terminal, data of the composite image for display on the display unit of the signage terminal.

10. The non-transitory computer readable medium according to claim 9, wherein
the method further comprises:
generating, at the mobile terminal, an interface through which the user can select one template from the one or more acquired templates.

11. The non-transitory computer readable medium according to claim 9 or 10, wherein
the method further comprises:
generating, at the mobile terminal, an interface through which the user can input texts to be added to the acquired template.

12. The non-transitory computer readable medium according to claim 11, wherein the method further comprises:
generating, at the mobile terminal, an interface through which the user can set one or more attribute (s) of the texts.

13. The non-transitory computer readable medium according to any one of claims 9 to 12, wherein
the method further comprises:
generating, at the mobile terminal, an interface through which the user can select a picture to be added to the acquired template.

14. The non-transitory computer readable medium according to any one of claims 9 to 13, wherein
the method further comprises:
generating, at the mobile terminal, an interface through which the user can set a time period during which the composite image is displayed on the display unit; and
transmitting information about the time period from the mobile terminal to the signage terminal.

15. The non-transitory computer readable medium according to any one of claims 9 to 14, wherein
the method further comprises:
generating at the mobile terminal an interface through which the user can set a sequence according to which the composite image is displayed on the display unit with respect to the other images displayed on the display unit; and
transmitting information about the sequence from the mobile terminal to the signage terminal.

16. The non-transitory computer readable medium according to any one of claims 9 to 15, wherein
the data of the composite image is transmitted wirelessly using one of near-field wireless communication protocols.

17. A mobile terminal communicating wirelessly with a signage terminal that has a display on which an image composed at the mobile terminal is to be displayed, the mobile terminal comprising:
a wireless communication unit configured to acquire one or more templates;
an operation unit configured to receive a user input of display element to be added to one of the acquired templates; and
a control unit configured to generate a composite image that includes an image of the acquired template with the display elements added thereto,
wherein the wireless communication module is further configured to transmit data of the composite image for display on the display unit of the signage terminal.

18. The mobile terminal according to claim 17, further comprising:
a display unit, wherein
the control unit is further configured to control the display unit to display an interface through which the user can select one template from the one or more acquired templates.

19. The mobile terminal according to claim 17 or 18, further comprising:
a display unit, wherein
the control unit is further configured to control the display unit to display an interface through which the user can input texts to be added to the acquired template.

20. The mobile terminal according to claim 19, further comprising:
a display unit, wherein
the control unit is further configured to control the display unit to display an interface through which the user can set one or more attribute(s) of the texts.
